# EUROPEAN PATENT APPLICATION

(11) **EP 3 364 385 A1**
(43) Date of publication of application: **22.08.2018**
(21) Application number: 18152546.0
(22) Date of filing: 19.01.2018
(51) Int. Cl.: G07G 1/00, G06Q 20/20

(54) **CHECKOUT APPARATUS AND CHECKOUT SYSTEM**

(30) Priority: 16.02.2017 JP 2017027078
(71) Applicant: Toshiba TEC Kabushiki Kaisha, Tokyo 141-8562 (JP)
(72) Inventor: HARAGUCHI, Takeshi, Shinagawa-ku,, Tokyo 141-8562 (JP)
(74) Representative: Takeuchi, Maya

(57) **Abstract**

A checkout system according to an embodiment includes a registration apparatus in communication with a plurality of checkout apparatuses. The checkout apparatuses each include a display device, a communication interface, a payment device, and a controller. The display device displays an instruction to provide an input to start a checkout processing. When the input to start the checkout processing is received, the communication interface transmits a checkout processing request to the registration apparatus. The checkout processing request includes identification information for identifying the checkout apparatus. The checkout apparatus receives, from the registration apparatus in response to the checkout processing request, transaction information generated by the registration apparatus. The payment device processes payment in accordance with the received transaction information.

## Description

### FIELD

Embodiments described herein relate generally to a checkout apparatus and a checkout system.

### BACKGROUND

In a semi-self-service type checkout system, a registration job of registering commodity information for a commodity or a service is performed by a store clerk at a registration apparatus, and a checkout processing is performed by a customer at a checkout apparatus. In such a checkout system, since the customer executes the checkout processing, the store clerk can proceed to a registration job for a next customer, and it is possible to shorten the time to wait at a register table.

In such a checkout system, there is an arrangement in which a plurality of the checkout apparatuses are connected to one registration apparatus. According to such an arrangement, even if a previous customer takes too much time during checkout, or the checkout apparatus becomes in a state where the checkout processing cannot be executed, a next customer can be guided to another checkout apparatus, and thus, there is an advantage that the checkout processing can be carried out smoothly.

In the above-describe checkout system, after registration of all commodities relating to one transaction is completed and the amount to be billed is calculated, the store clerk designates the checkout apparatus to which transaction data is sent from the registration apparatus, and the registration apparatus sends the transaction data to the designated checkout apparatus.

However, a customer may experience difficulty understanding which checkout apparatus among the plurality of the checkout apparatuses is to carry out the checkout processing. Therefore, for the store clerk, it takes time to decide which checkout apparatus among the plurality of the checkout apparatuses the transaction data is transferred to, and then to guide the customer appropriately to the checkout apparatus which is a data transfer destination.

To solve the above-cited problems, there is provided a checkout system comprising: a plurality of checkout apparatuses, each checkout apparatus including a display device, a first communication interface, a payment device, and a first controller configured to: control the display device to display an instruction to provide an input to start a checkout processing, receive the input to start the checkout processing, transmit, via the first communication interface, a checkout processing request, the checkout processing request including identification information for identifying the checkout apparatus, receive, via the first communication interface and in response to the checkout processing request, transaction information, and control the payment device to process payment in accordance with the received transaction information, a registration apparatus including a scanner configured to scan a code symbol on a commodity, a second communication interface, and a second controller configured to: generate registration information based on the code symbol scanned by the scanner, receive, via the second communication interface, the checkout processing request, and transmit, via the second communication interface and in response to the received checkout processing request, the transaction information including the generated registration information to the checkout apparatus corresponding to the identification information included in the checkout processing request.

Preferably, the registration apparatus further includes a second display device, and the second controller controls the second display device to display a confirmation screen requesting an input to confirm whether to transmit the transaction information.

Preferably, the second controller controls the second display device to display the confirmation screen after the checkout processing request is received.

Preferably, the second controller controls the second display device to display the confirmation screen after the registration information for the transaction is generated and before the checkout processing request is received.

Preferably, the registration apparatus further includes a second display device, and the second controller controls the second display device to display a guidance screen instructing a customer to proceed to one of the plurality of checkout apparatuses.

Preferably, the second controller is further configured to:
determine a first transaction is complete after the transaction information is transmitted, and generate registration information corresponding to a second transaction when the first transaction is determined to be complete.

Preferably, each checkout apparatus further includes: a display pole with a light, wherein the first controller is further configured to control the light to indicate a status of the checkout apparatus as one of available to start the checkout processing and unavailable to start the checkout processing.

Preferably, the display device includes an integrated touch panel, and the input to start the checkout processing is received via the touch panel at a position corresponding to the displayed instruction to provide the input to start the checkout processing.

Preferably, the payment device includes a card reader configured to read a card and process the payment based on card information read by the card reader.

Preferably, the payment device further includes a change dispensing machine configured to process the payment by receiving bills and coins and dispensing bills and coins as change.

The present invention further relates to a checkout apparatus for used in a checkout system that includes a registration apparatus in communication with a plurality of checkout apparatuses, the checkout apparatus comprising: a display device; a communication interface; a payment device; and a controller configured to: control the display device to display an instruction to provide an input to start a checkout processing, receive the input to start the checkout processing, control the communication interface to transmit a checkout processing request to the registration apparatus, the checkout processing request including identification information for identifying the checkout apparatus, receive, from the registration apparatus in response to the checkout processing request, transaction information generated by the registration apparatus, and control the payment device to process payment in accordance with the received transaction information.

The checkout apparatus may further comprise: a display pole with a light, wherein the controller is further configured to control the light to indicate a status of the checkout apparatus as one of available to start the checkout processing and unavailable to start the checkout processing.

Preferably, the display device includes an integrated touch panel, and the input to start the checkout processing is received via the touch panel at a position corresponding to the displayed instruction to provide the input to start the checkout processing.

Preferably, the payment device includes a card reader configured to read a card and process the payment based on the read card.

Preferably, the payment device further includes a change dispensing machine configured to process the payment by receiving bills and coins and dispensing bills and coins as change.

The present invention also relates to a checkout method for a checkout system that includes a registration apparatus in communication with a plurality of checkout apparatuses, the method comprising: displaying on a display device of one checkout apparatus an instruction to provide an input to start a checkout processing; receiving, in the one checkout apparatus, the input to start the checkout processing; in response to the received input to start the checkout processing, transmitting a checkout processing request from the one checkout apparatus to the registration apparatus, the checkout processing request including identification information for identifying the one checkout apparatus; receiving in the one checkout apparatus, from the registration apparatus in response to the checkout processing request, transaction information generated by the registration apparatus; and processing a payment in the one checkout apparatus in accordance with the received transaction information.

The method may further comprise: controlling a light on each of the plurality of checkout apparatuses to indicate a status of the corresponding checkout apparatus as one of available to start the checkout processing and unavailable to start the checkout processing.

Preferably, the input to start the checkout processing is received via a touch panel on the one checkout apparatus at a position corresponding to the displayed instruction to provide the input to start the checkout processing.

Preferably, the payment is processed with a card reader configured to read a card and process the payment based on the read card.

Preferably, the payment is processed with a change dispensing machine configured to process the payment by receiving bills and coins and dispensing bills and coins as change.

### DESCRIPTION OF THE DRAWINGS

Fig. 1 is a schematic diagram illustrating the overall arrangement of a checkout system according to an embodiment;
Fig. 2 is a perspective view illustrating a registration apparatus in the checkout system;
Fig. 3 is a perspective view illustrating the appearance of a checkout apparatus in the checkout system;
Fig. 4 is a block diagram illustrating a hardware configuration of the checkout system;
Fig. 5 is a block diagram illustrating a functional configuration of the checkout system;
Fig. 6 is a diagram illustrating an example of a customer guidance screen displayed on a display device of the registration apparatus;
Fig. 7 is a diagram illustrating an example of a checkout start key displayed on a display device of the checkout apparatus;
Fig. 8 is a diagram illustrating an example of a checkout processing executed by the checkout system;
Fig. 9 is a diagram illustrating another example of the checkout processing executed by the checkout system;
Fig. 10 is a diagram illustrating an example of a confirmation screen displayed on a display device of the registration apparatus; and
Fig. 11 is a diagram illustrating another example of the checkout processing executed by the checkout system.

### DETAILED DESCRIPTION

A checkout system according to an embodiment includes a registration apparatus in communication with a plurality of checkout apparatuses. The checkout apparatuses each include a display device, a communication interface, a payment device, and a controller. The display device displays an instruction to provide an input to start a checkout processing. When the input to start the checkout processing is received, the communication interface transmits a checkout processing request to the registration apparatus. The checkout processing request includes identification information for identifying the checkout apparatus. The checkout apparatus receives, from the registration apparatus in response to the checkout processing request, transaction information generated by the registration apparatus. The payment device processes payment in accordance with the received transaction information.

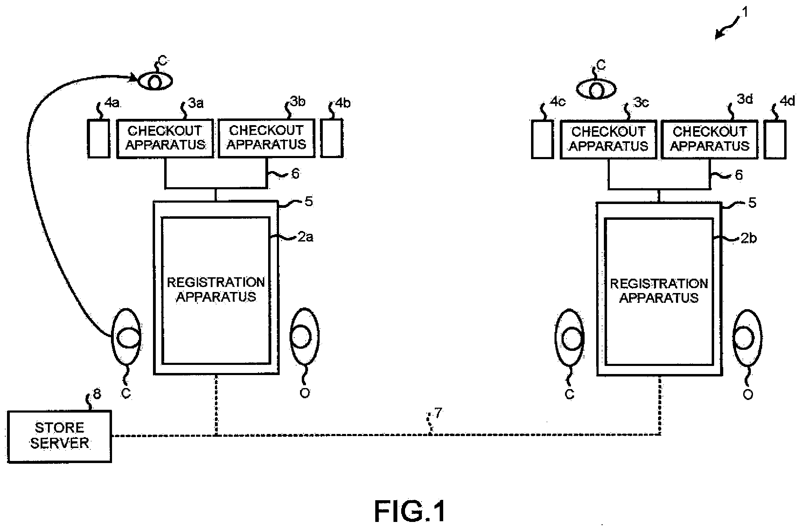

Fig. 1 is a schematic diagram illustrating the overall arrangement of a checkout system 1 according to the present embodiment. As shown in Fig. 1, the checkout system 1 includes registration apparatuses 2a and 2b and checkout apparatuses 3a, 3b, 3c and 3d. The registration apparatuses 2a and 2b are each provided on a separate counter 5, respectively. Tables 4a, 4b, 4c and 4d for holding commodity baskets are respectively provided next to the checkout apparatuses 3a, 3b, 3c and 3d.

The registration apparatus 2a is connected to the two checkout apparatuses 3a and 3b through a connection interface 6. Similarly, the registration apparatus 2b is connected to the two checkout apparatuses 3c and 3d via the connection interface 6. In addition, the registration apparatuses 2a and 2b are connected to a store server 8 installed in a back office of the store through a network 7 such as a LAN (Local Area Network).

In Fig. 1, the checkout system 1 includes two registration apparatuses 2a and 2b and four checkout apparatuses 3a, 3b, 3c and 3d; however, the number of apparatuses is not limited thereto. In Fig. 1, the number of the checkout apparatuses 3 connected to the registration apparatus 2 is two, but the number of the checkout apparatuses 3 is not limited thereto, and three or more checkout apparatuses 3 may be connected to the registration apparatus 2.

Since the registration apparatuses 2a and 2b have the same structure and function, in the following description, where each apparatus is not particularly limited, the registration apparatuses 2a and 2b are collectively referred to as registration apparatus 2. Since the checkout apparatuses 3a, 3b, 3 and 3d have the same functional component as each other, in the following description, where each apparatus is not particularly limited, the checkout apparatuses 3a, 3b, 3 and 3d are collectively referred to as a checkout apparatus 3.

During registration of a commodity to be sold, a store clerk O and a customer C face each other from opposite sides of the counter 5. As an example, upon completion of the registration processing by the registration apparatus 2a, the store clerk O or customer C moves a commodity basket to one of the checkout apparatuses 3a and 3b. For example, as shown in Fig. 1, if the commodity basket is moved to the table 4a of the checkout apparatus 3a, the customer C pays the price, i.e., executes a checkout processing at the checkout apparatus 3a. In this way, in the semi-self-service type checkout system 1, a customer executes the checkout processing by himself/herself using the checkout apparatus 3, and thus, the store clerk O can shift to a registration processing for a next customer in the registration apparatus 2.

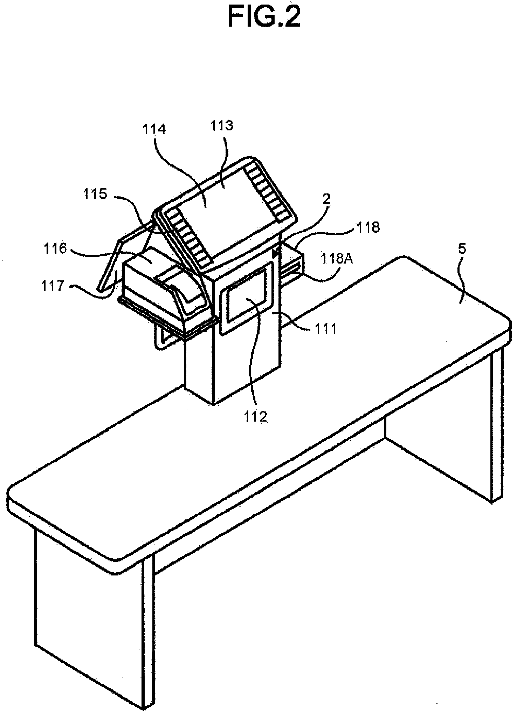

Next, the configuration of the registration apparatus 2 is described with reference to Fig. 2.

Fig. 2 is a perspective view illustrating the registration apparatus 2. As shown in Fig. 2, the registration apparatus 2 is provided on the upper surface of the counter 5 and includes a vertical scanner 111 having a reading window 112. The scanner 111 reads a commodity code (sales target code) from a code symbol. The scanner 111 may be a scan type scanner that reads the commodity code included in a code symbol by scanning the code symbol (e.g., barcode) attached to a commodity and analyzing the reflected laser light.

The registration apparatus 2 has a clerk display device 114 and an operation section 115 provided on the top of the scanner 111. The clerk display device 114 displays a commodity name and a price of the commodity having the code symbol scanned by the scanner 111. On the surface of the clerk display device 114, a touch panel 113 is provided. The touch panel 113 and the operation section 115 are used for assisting input of commodity information.

A printer 116 is provided at the left side of the registration apparatus 2 as seen from the store clerk O side. A card reader 118 is provided at the right side of the registration apparatus 2 as seen from the store clerk O side. The card reader 118 magnetically reads and writes information on a magnetic card inserted into an insertion slot 118A. A customer display device 114 is provided opposite of the clerk display device 114. The customer display device 117 displays to the customer C information necessary for the transaction.

In the registration apparatus 2, a code such as a barcode attached to the commodity or a two-dimensional code is read, and the commodity is identified based on a commodity code included in the code.

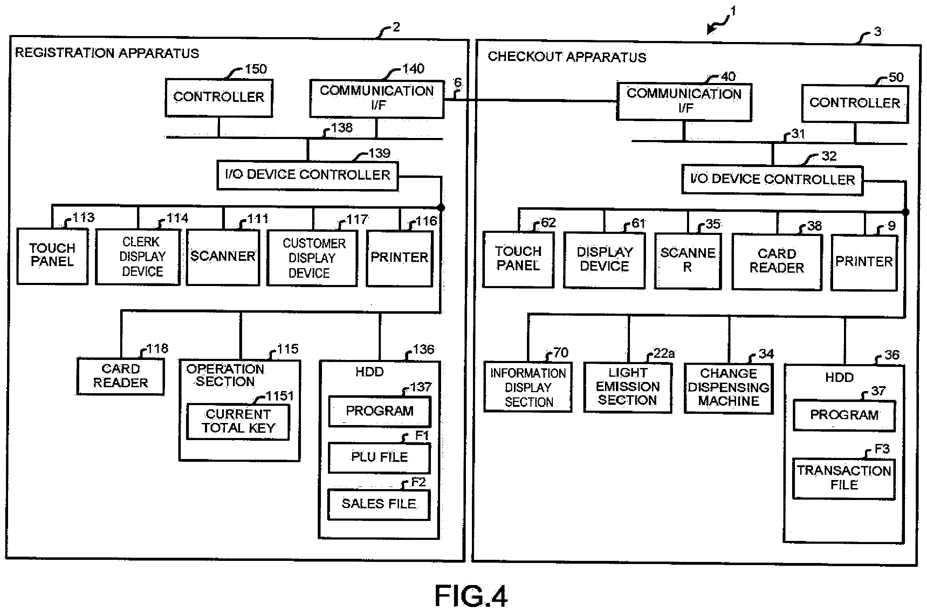

The registration apparatus 2 displays a screen for receiving confirmation of the commodity identified based on the commodity code and for receiving an input, such as number, on the clerk display device 114. Then, on the basis of the commodity code , the input number and the like, the registration apparatus 2 reads commodity information such as commodity classification, a commodity code, a commodity name, a unit price and the like of the commodity corresponding to the commodity code from a PLU file F1 (refer to Fig. 4), and stores it in a sales file F2 (refer to Fig. 4) as sales data.

The basket containing the commodity purchased by the customer C is placed at the right side of the counter 5 in Fig. 2. The store clerk O takes the commodity out of the basket and holds the commodity code attached to the commodity over the front surface of the reading window 112 to read the commodity code with the scanner 111. The registration apparatus 2 reads the commodity information corresponding to the read commodity code from the PLU file F1 and executes a sales registration processing to register it as sales data in the sales file F2.

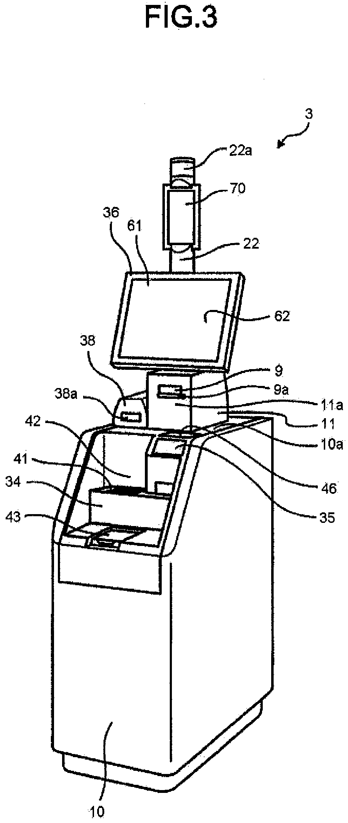

Next, the configuration of the checkout apparatus 3 is described with reference to Fig. 3.

Fig. 3 is a perspective view illustrating the appearance of the checkout apparatus 3. As shown in Fig. 3, the checkout apparatus 3 includes a first housing 10 and a second housing 11. The first housing 10 includes a change dispensing machine 34 and a scanner 35. The second housing 11 is positioned on an upper surface 10a of the first housing 10 and includes a display device 61, a printer 9, and a card reader 38.

The scanner 35 has the same structure as the scanner 111. The scanner 35 scans a code symbol held in front of an image capturing window provided at the upper side of the first housing 10. The scanner 35 outputs a commodity code obtained by scanning the code symbol to a controller 150 (refer to Fig. 4).

The display device 61 has a touch panel 62 on the surface thereof and is provided above the second housing 11. The display device 61 is, for example, a liquid crystal panel, and displays information regarding an operation state of the checkout apparatus 3 with images or characters. The touch panel 62 is provided on the surface of the display device 61, and outputs information based on a position touched by the customer C to a controller 50 (refer to Fig. 4).

The card reader 38 is provided at the left side of the second housing 11 and on the upper surface 10a of the first housing 10. The card reader 38 reads and writes information on a credit card, a membership card or the like inserted from a card insertion port 38a. The card reader 38 is an example of a payment device.

The change dispensing machine 34 includes a coin deposit port 46, a bill deposit port 41, a bill dispensing port 42, and a coin dispensing section 43. The change dispensing machine 34 stores bills inserted into the charge deposit port 41 in a bill storage section (not shown). The change dispensing machine 34 stores coins inserted into the coin deposit port 46 in a coin storage section (not shown). The change dispensing machine 34 also pays out change through the bill dispensing port 42 in response to a change payout request from the controller 50. Likewise, the change dispensing machine 34 pays out change through the coin dispensing section 43 in response to a change payout request from the controller 50. The change dispensing machine is another example of a payment device.

The printer 9 has a printing section (not shown) provided in the second housing 11 and a receipt issuing port 9a provided on a front surface 11 a of the second housing 11. Under the control of the controller 50, the printer 9 prints a receipt and issues it from the receipt issuing port 9a.

The checkout apparatus 3 includes a display pole 22 vertically arranged at the rear side of the upper surface 10a of the first housing 10. The display pole 22 has a light 22a which selectively emits blue or red light at the tip of the upper side thereof. The light 22a emits the light of each color in a light emission pattern according to a processing status in the checkout apparatus 3 to call attention of the store clerk. The processing status for emitting the light, an emitted color, and the light emission pattern can be appropriately set.

Since the light 22a is provided at the upper end of the display pole 22, it is noticeable not only for the store clerk O which is the operator of the registration apparatus 2 but also for other store clerks. Since it is easy to see the emitted light from the position of the registration apparatus 2, it is also easy for the customer who stands in the front of the registration apparatus 2 to see the emitted light.

The display pole 22 has an information display section 70 below the light 22a. The information display section 70 is, for example, a liquid crystal panel and displays image information and character information. The information display section 70 is fixedly arranged with a display surface thereof oriented in the same direction as the display device 61. For example, a content of an error occurring in the checkout apparatus 3 is displayed on the information display section 70.

The customer operates the checkout apparatus 3 and pays for the price of the commodity using cash, credit card, electronic money, or the like, i.e., executes the checkout processing. In the checkout processing, the checkout apparatus 3 displays a total amount of one transaction based on the transaction information received from the registration apparatus 2, and controls a processing relating to the settlement corresponding to the amount. The transaction information includes information such as the total amount for one transaction which is a processing target, commodity information of each commodity sold in the transaction, an apparatus number of the registration apparatus 2 which is the data transmission source, a name of a store clerk in charge and the like. The transaction information may include other information necessary for receipt printing. For example, the transaction information may include promotional information for receipt printing.

Next, the hardware configuration of the checkout system 1 is described. FIG. 4 is a block diagram illustrating the hardware configuration of the checkout system 1.

As shown in Fig. 4, the registration apparatus 2 includes the controller 150. The controller 150 includes a CPU (Central Processing Unit) for executing a control processing, a ROM (Read Only Memory, not shown) and a RAM (Random Access Memory, not shown) and the like. The ROM stores various programs executed by the CPU and various data. The RAM temporarily stores data and programs at the time the CPU executes various programs. The RAM also stores various screen display data displayed on the clerk display device 114.

The controller 150 is connected to the scanner 111 and the touch panel 113 via an I/O (Input/Output) device controller 139 and a bus line 138. The controller 150 is connected to the clerk display device 114 and an operation section 115 (such as a keyboard), via the I/O device controller 139 and the bus line 138. The controller 150 is connected to the printer 116, the customer display device 117, the card reader 118, and an HDD (Hard Disk Drive) 136 via the I/O device controller 139 and the bus line 138.

The operation section 115 includes a cash total key 1151 for declaring the end of the input of commodity codes in the transaction. The cash total key 1151 is used for receiving an instruction to close a current transaction and to shift to a payment processing (the checkout processing) of the transaction. An operation key such as the cash total key 1151 may be provided on a keyboard of the operation section 115 or displayed on the clerk display device 114 to receive a selection operation via the touch panel 113.

The HDD 136 stores a program 137 (which is executed by the CPU of the controller 150), the PLU file F1, and the sales file F2. The PLU file F1 includes the commodity code uniquely assigned to each commodity in association with commodity information of the commodity such as a name, a price, and a commodity classification.

The registration apparatus 2 may identify the commodity using general object recognition. If the registration apparatus 2 identifies the commodity using general object recognition, the PLU file F1 further stores feature values or a reference image of each commodity. The feature value is data such as color tone read from the reference image of the commodity and unevenness condition of surface. The sales file F2 stores the data generated during sales registration by the registration apparatus 2.

The checkout apparatus 3 includes the controller 50. The controller 50 is a computer including a CPU and storage devices such as a ROM (not shown) and a RAM (not shown). The ROM stores various programs executed by the CPU and various data. The RAM temporarily stores data and programs at the time the CPU executes various programs and stores the sales data indicating a sales record of commodity and various screen display data displayed on the display device 61.

The controller 50 is connected to a touch panel 62, the display device 61, the scanner 35, the card reader 38, the printer 9, the change dispensing machine 34, the light 22a, the information display section 70, and an HDD 36 via an I/O machine controller 32 and a bus line 31. The controller 50 executes the data communication with the registration apparatus 2 connected via a connection interface 6 via a communication I/F 40.

The card reader 38 reads information from the credit card or membership card inserted into the card insertion port 38a. The printer 9 prints a receipt after settlement and issues the receipt from the receipt issuing port 9a. The change dispensing machine 34 accepts bills inserted into the bill deposit port 41 or coins inserted into the coin deposit port 46. The change dispensing machine 34 dispenses change from the bill dispensing port 42 or the coin dispensing section 43 in response to a dispensing instruction from the controller 50.

The HDD 36 stores a program 37 executed by the controller 50 and a transaction file F3. The transaction file F3 includes the transaction information received from the registration apparatus 2 and checkout information for recording details of the checkout processing executed by the checkout apparatus 3.

Next, the program 137 executed by the registration apparatus 2 and the program 37 executed by the checkout apparatus 3 is described.

As described above, the program 137 executed by the registration apparatus 2 of the present embodiment is incorporated in advance in the HDD 136. The program 137 executed by the registration apparatus 2 according to the present embodiment may be provided from a computer-readable recording medium such as a CD-ROM, a flexible disk (FD), a CD-R, a DVD (Digital Versatile Disk) in an installable file format or an executable file format.

Furthermore, the program 137 executed by the registration apparatus 2 according to the present embodiment may be stored in a computer connected to a network such as the Internet and downloaded to the registration apparatus 2 via the network. The program 137 executed by the registration apparatus 2 of the present embodiment may be provided or distributed via a network such as the Internet.

The program 37 executed by the checkout apparatus 3 of the present embodiment is incorporated in the HDD 36 in advance. The program 37 executed by the checkout apparatus 3 of the present embodiment may be provided from a computer-readable recording medium such as a CD-ROM, a flexible disk (FD), a CD-R, a DVD (Digital Versatile Disk) in a file of an installable format or an executable format.

Furthermore, the program 37 executed by the checkout apparatus 3 of the present embodiment may be stored in a computer connected to a network such as the Internet and downloaded to the checkout apparatus 3 via the network. The program 37 executed by the checkout apparatus 3 of the present embodiment may be provided or distributed via a network such as the Internet.

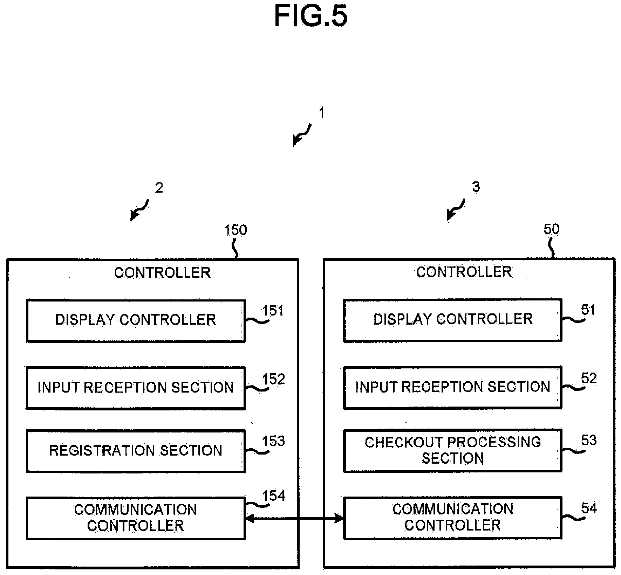

Fig. 5 is a block diagram illustrating the functional configuration of the checkout system 1. As shown in Fig. 5, the program 137 (refer to Fig. 4) executed by the registration apparatus 2 has a module configuration including a display controller 151, an input reception section 152, a registration section 153, and a communication controller 154. The CPU (processor) of the controller 150 reads out the program 137 from the HDD 136 and loads each component described above on a main storage device. As a result, each component described above is generated on the main storage device. In one embodiment, the controller 150 is a processor that is programmed to carry out the functions of the display controller 151, the input reception section 152, the registration section 153, and the communication controller 154. In another embodiment, the controller 150 is a hardware controller, e.g., an application specific integrated circuit (ASIC) and field programmable gate array (FPGA), that is configured to carry out the functions of the display controller 151, the input reception section 152, the registration section 153, and the communication controller 154.

As shown in Fig. 5, the program 37 executed by the checkout apparatus 3 has a module configuration including a display controller 51, an input reception section 52, a checkout processing section 53, and a communication controller 54. The CPU (processor) of the controller 50 reads out the program 37 from the HDD 36, and loads each component described above on a main storage device. As a result, each component described above is generated on the main storage device. In one embodiment, the controller 51 is a processor that is programmed to carry out the functions of the display controller 51, the input reception section 52, the checkout processing section 53, and the communication controller 54. In another embodiment, the controller 150 is a hardware controller, e.g., an application specific integrated circuit (ASIC) and field programmable gate array (FPGA), that is configured to carry out the functions of the display controller 51, the input reception section 52, the checkout processing section 53, and the communication controller 54.

First, the function of each component realized by the controller 150 of the registration apparatus 2 is described.

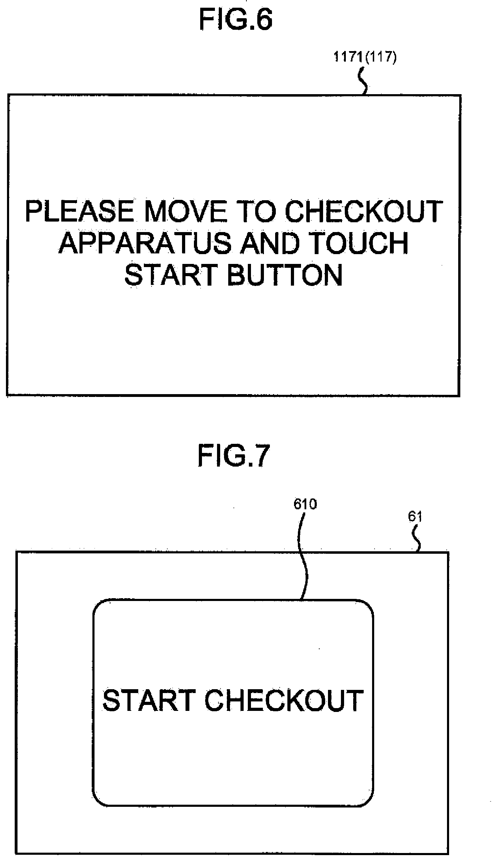

The display controller 151 generates display data for output to the clerk display device 114 and the customer display device 117 (see Fig. 2 and Fig. 4), and controls a display processing in these display devices. For example, the display controller 151 displays a registration screen for executing a commodity registration processing on the clerk display device 114. If the cash total key 1151 is operated in the commodity registration processing and an instruction to close one transaction is received, the display controller 151 displays a guidance screen as shown in Fig. 6 on the customer display device 117.

Fig. 6 is a diagram illustrating an example of the guidance screen displayed by the customer display device 117 of the registration apparatus 2. The guidance screen includes a message for guiding a customer from the registration apparatus 2 to the checkout apparatus 3 and instructing the customer to execute an operation for starting the checkout processing in the checkout apparatus 3 set as a destination. As an example, a message such as "Go to the checkout apparatus and press a start button" is displayed on the guidance screen.

According to such a guidance, the customer autonomously selects an available checkout apparatus 3 and moves to the front of the checkout apparatus 3. The available checkout apparatus 3 is a checkout apparatus 3 which is not used by other customers and is not in an unusable state such as offline state. As a result, the store clerk can omit the operation of selecting the checkout apparatus 3 in the registration apparatus 2. Jobs such as a condition confirmation and selection of the available checkout apparatus 3 which were conventionally executed by the store clerk are now executed by the customer. As a result, the present embodiment optimizes the processing flow in the checkout system 1 and reduces a job load of the store clerk.

The input reception section 152 receives various input from the touch panel 113, the scanner 111, the card reader 118, the operation section 115, and the communication I/F 140. For example, the input reception section 152 receives the input of the commodity code read by the scanner 111 from the code symbol attached to the commodity. The input reception section 152 receives the input operation when the touch panel 113 is touched while displaying various screens on the clerk display device 114.

When the commodity code of the sales commodity and the name of commodity are input via the touch panel 113 and the scanner 111, the registration section 153 reads the commodity information of the commodity from the PLU file F1. The registration section 153 (transaction information generation module) ends the registration processing of the commodity in the transaction and calculates a total amount relating to the transaction when an instruction to terminate the transaction is input via the cash total key 1151. The registration section 153 generates the transaction information including the commodity information of all the commodities registered in the transaction, the total amount of the transaction, the apparatus number identifying the registration apparatus 2, and the store clerk information for identifying the store clerk in charge. The transaction information may not include the total amount. The registration apparatus 2 transmits the commodity information to the checkout apparatus 3, and the checkout apparatus 3 may calculate the total amount based on the commodity information received from the registration apparatus 2 to use in the checkout processing.

The communication controller 154 controls transmission and reception of various information to and from the checkout apparatus 3 connected via the communication I/F 140 or the store server 8. For example, the communication controller 154 (the checkout processing request reception module) receives a checkout processing request from the checkout apparatus 3 which is one of a plurality of the checkout apparatuses 3 connected to the registration apparatus 2.

The checkout processing request refers to information including identification information that identifies the checkout apparatus 3 which is the transmission source with the apparatus number and a command for requesting start of the checkout processing in the checkout apparatus 3.

If the checkout processing request is received from the checkout apparatus 3, the communication controller 154 (transaction information transmission module) transmits the transaction information recently generated by the registration section 153 to the checkout apparatus 3 which is the transmission source of the checkout processing request.

Next, the function of each section realized by the controller 50 of the checkout apparatus 3 is described.

The display controller 51 generates display data for output to the display device 61 and the information display section 70 (both refer to Fig. 3 and Fig. 4), and controls display processing in these display devices. For example, the display controller 51 displays a checkout start key 610 (refer to Fig. 7) on the display device 61 after starting the checkout apparatus 3.

Fig. 7 is a diagram illustrating an example of the checkout start key 610 displayed on the display device 61 of the checkout apparatus 3. The checkout start key 610 is an operation key for receiving an instruction operation to start the checkout processing (payment processing) on the checkout apparatus 3 from among the plurality of the checkout apparatuses 3 connected to the registration apparatus 2.

The display controller 51 (display control module) displays a total amount of the transaction on a checkout screen (not shown) of the display device 61 based on the transaction information received from the registration apparatus 2. If the transaction information contains the commodity information of the transaction but does not include the total amount, the display controller 51 may calculate the total amount based on the commodity information of the transaction, and display the calculated total amount on the display device 61. The checkout screen may be similar to that of a screen used in the checkout apparatus of a conventional semi-self-service type checkout system. For example, a selection icon for selecting one payment method from the payment methods such as cash, a credit card, electronic money or the like is provided on the checkout screen. The customer selects a desired payment method from the selection icons and executes the payment.

The input reception section 52 receives the input from the touch panel 62, the scanner 35, the card reader 38, and the change dispensing machine 34. For example, if the checkout start key 610 (refer to Fig. 7) is operated, the input reception section 52 (checkout instruction reception module) receives an instruction operation to start the checkout processing.

The communication controller 54 controls transmission and reception of various information to and from the registration apparatus 2 connected via the communication I/F 40. For example, if the input reception section 52 receives the selection operation on the checkout start key 610, the communication controller 54 (checkout processing request module) outputs the checkout processing request to the registration apparatus 2 connected to the checkout apparatus 3.

The checkout processing request is information which includes identification information for identifying the checkout apparatus 3, such as the apparatus number, and is output to request the start of the checkout processing. The checkout apparatus 3 requests the registration apparatus 2 to transmit the latest transaction information generated by the registration apparatus 2 to the checkout apparatus 3 by outputting the checkout processing request to the registration apparatus 2. The registration apparatus 2 receives the checkout processing request and transmits the transaction information for the recently generated transaction to the checkout apparatus 3 which is the transmission source of the checkout processing request.

The communication controller 54 receives the transaction information on the transaction recently executed by the registration apparatus 2 from the registration apparatus 2 that sent the checkout processing request. As described above, the transaction information includes information such as the commodity information of the commodity subjected to the sales registration in the transaction recently executed by the registration apparatus 2 which is the transmission source and the total amount of the transaction.

The checkout processing section 53 (checkout module) controls the checkout processing with a payment method when the customer selects the payment method from a checkout screen (not shown) as described above and the input reception section 52 receives the operation input. In the case of cash payment, the checkout processing section 53 opens the bill deposit port 41 and the coin deposit port 46, counts bills or coins inserted into these deposit ports, and calculates the change. Then, the checkout processing section 53 controls the change dispensing machine 34 to dispense bills from the bill dispensing port 42 if there are bills corresponding to the change and dispense coins from the coin dispensing section 43 if there are coins corresponding to the change.

In a case of a credit card payment, the checkout processing section 53 reads information from the credit card inserted in the card reader 38 and inquires a data center of the credit company whether the transaction is permitted or not, based on the information. The checkout processing section 53 outputs the transaction information to the data center after receiving the transaction permission.

Next, a example of the checkout processing executed by the checkout system 1 of the present embodiment is described.

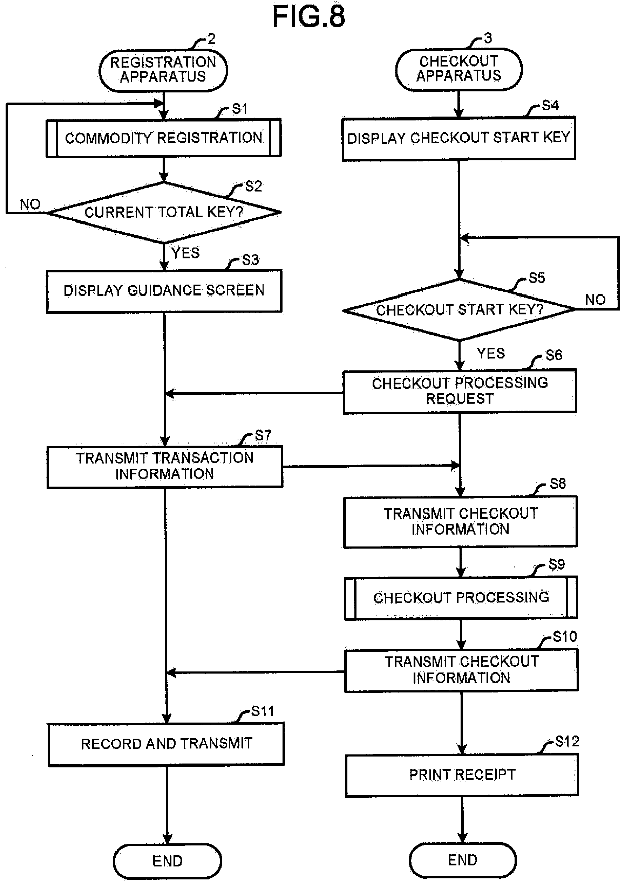

Fig. 8 is a sequence diagram illustrating an example of the checkout processing executed by the checkout system 1. In the registration section 2, the registration section 153 retrieves the commodity information based on the commodity code received by the input reception section 152 from the touch panel 113 and the scanner 111 from the PLU file F1, and registers the commodity information as the sales object (Act S1). If the cash total key 1151 is operated (Yes in Act S2), the input reception section 152 receives an instruction to end the transaction. The display controller 151 then displays a guidance screen 1171 as shown in Fig. 6 on the customer display device 117 (Act S3). If No in Act S2 is determined, the commodity registration in Act S1 is continued until the cash total key 1151 is operated.

It is preferable that the input reception section 152 does not receive an operation to start a checkout processing on a next transaction (second transaction) until the transaction information of the previous transaction (first transaction) is transmitted to the checkout apparatus 3. The operation to start the next checkout processing is, for example, an operation on the cash total key 1151 in Act S2.

The registration section 153 can start a commodity reading processing and the registration processing for the next customer (i.e., next transaction) after a registration job of the previous customer is completed and the cash total key 1151 is operated. If the pervious transaction information is not transmitted and the next transaction information is transferable, the previous transaction information and the next transaction information may become transferable at the same time. Thus, in the present embodiment, after the communication controller 154 sends the transaction information of the first transaction to any one of the checkout apparatuses 3, the input reception section 152 receives the operation on the cash total key 1151 for the second transaction.

The display controller 51 of the checkout apparatus 3 displays the checkout start key 610 as shown in Fig. 7 on the display device 61 (Act S4). The input reception section 52 determines whether or not the operation on the checkout start key 610 is received via the touch panel 62 (Act S5). The customer who terminates the registration processing at the registration apparatus 2 moves to the front of the checkout apparatus 3 and touches the checkout start key 610 via the touch panel 62. When the input reception section 52 receives the input operation of the checkout start key 610 (Yes in Act S5), the communication controller 54 transmits the checkout processing request to the registration apparatus 2 (Act S6). On the other hand, while the checkout start key 610 is not operated (No in Act S5), the display controller 51 waits for the operation in Act S5.

Upon receiving the checkout processing request from the checkout apparatus 3 (Act S6), the communication controller 154 of the registration apparatus 2 transmits the transaction information for the latest transaction (Act S7). When the communication controller 54 of the checkout apparatus 3 receives the transaction information (Act S7), the display controller 51 displays a checkout screen for executing the checkout processing on the display device 61 based on the received transaction information (Act S8). The display controller 51 displays the total amount for one transaction included in the transaction information on the checkout screen. A selection icon for selecting a payment method from the cash, the credit card, the electronic money and the like is also provided on the checkout screen.

If the customer selects the payment method from the selection icon, the checkout processing section 53 starts the checkout processing corresponding to the selected payment method (Act S9). For example, in the case of the cash payment, the checkout processing section 53 opens the bill deposit port 41 and the coin deposit port 46, counts bills or coins inserted into these deposit ports, and calculates the change. Then, the checkout processing section 53 controls the change dispensing machine 34 to dispense bills from the bill dispensing port 42 if there are bills corresponding to the change and dispense coins from the coin dispensing section 43 if there are coins corresponding to the change.

If the checkout processing is terminated, the checkout processing section 53 transmits checkout information recording the checkout content of the transaction to the registration apparatus 2 (Act S10). The communication controller 154 of the registration apparatus 2 records the received checkout information in the sales file F2 and transmits it to the store server 8 (Act S11). The checkout processing section 53 outputs receipt printing data generated from the transaction information and the checkout information to the printer 9, and the printer 9 prints a receipt (Act S12). For example, on the receipt, the commodity information such as a commodity code, a commodity name, a quantity, a price, and the like are printed based on the transaction information. On the receipt, a payment method (the cash, the card, the electronic money, etc.), a payment amount, a change, a card name, an electronic money name, an electronic money identifier, an electronic money balance, and the like are printed on the receipt based on the checkout information.

Fig. 8 illustrates an example in which the registration apparatus 2 automatically transmits (transfers) the transaction information for the latest transaction to the checkout apparatus 3 upon receiving the checkout processing request. As a modification, after the registration apparatus 2 receives the checkout processing request from the checkout apparatus 3, and after obtaining the confirmation operation by the store clerk in the registration apparatus 2, the registration apparatus 2 may start the transfer of the transaction information.

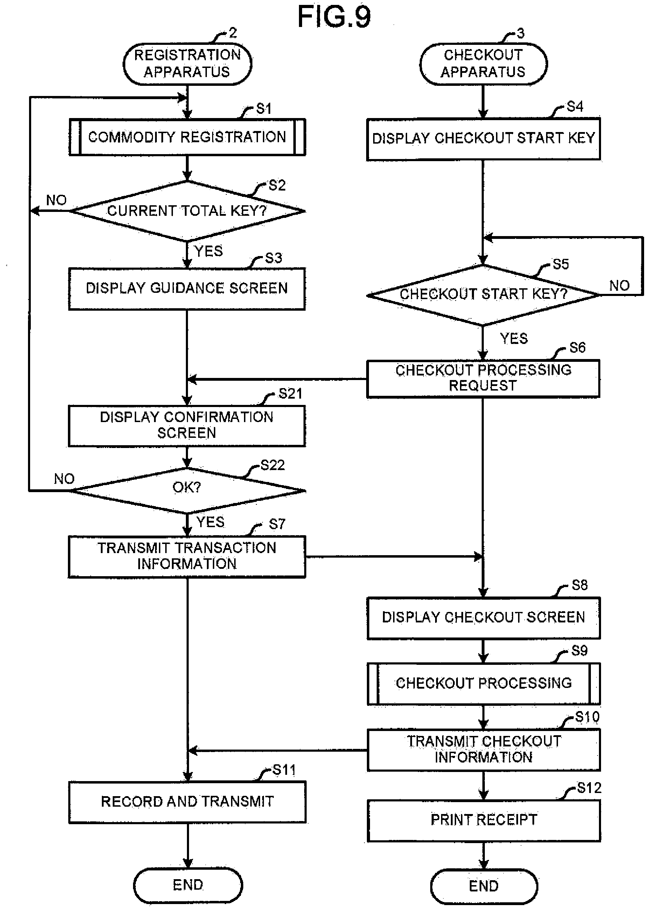

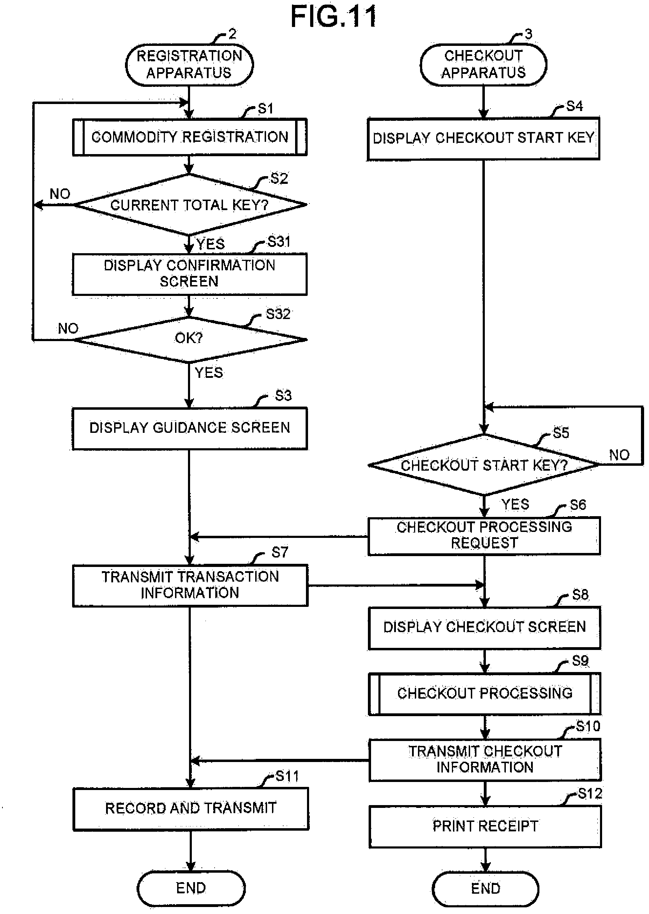

Although the timing of obtaining the confirmation operation by the store clerk is not particularly limited, in Fig. 9, an example in which the confirmation operation is obtained after the registration apparatus 2 receives the checkout processing request is described. In Fig. 11, an example in which confirmation operation is obtained based on operation of the cash total key 1151 is described.

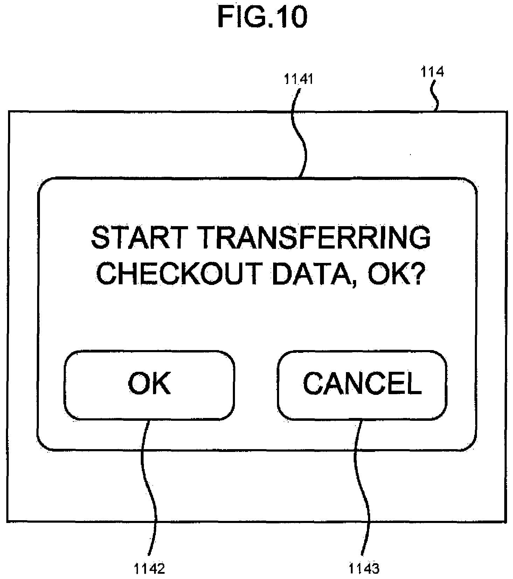

Fig. 9 is a sequence diagram illustrating an example of the procedure for enabling the clerk display device 114 to display the confirmation screen after the registration apparatus 2 receives the checkout processing request. The same procedures as those in Fig. 8 are denoted by the same reference numerals as those in Fig. 8, and the description thereof is omitted. Upon receiving the checkout processing request from the checkout apparatus 3 (Act S6), the display controller 151 of the registration apparatus 2 displays a confirmation screen 1141 (refer to Fig. 10) on the clerk display device 114 (Act S21).

Fig. 10 is a diagram illustrating an example of the confirmation screen 1141 displayed on the clerk display device 114 of the registration apparatus 2. A confirmation message such as "Start transferring the checkout data, OK?" is displayed on the confirmation screen 1141. On the confirmation screen 1141, an OK key 1142 for starting transmission of the transaction information and a cancel key 1143 for cancelling the transmission are arranged. If the store clerk operates the OK key 1142 (Yes in Act S22), the input reception section 152 receives the confirmation operation. Then the communication controller 154 transmits the transaction information of the latest transaction to the checkout apparatus 3 (Act S7). If No is determined in Act S22, the display controller 151 terminates the display of the confirmation screen 1141 and returns to a previous display such as a registration screen (Act S1).

In the modification, the input reception section 152 (confirmation operation reception module) of the registration apparatus 2 receives a confirmation operation for confirming whether to transmit the transaction information of the latest transaction to the checkout apparatus 3 before the communication controller 154 transmits the transaction information to the checkout apparatus 3. The communication controller 154 sends the transaction information of the latest transaction to the checkout apparatus 3 after the input reception section 152 receives the confirmation operation from the store clerk.

Fig. 11 is a diagram illustrating an example of the procedure in which the checkout apparatus 3 displays the confirmation screen 1141 on the clerk display device 114 after operating the cash total key 1151. The same procedures as those in Fig. 8 are denoted by the same reference numerals as those in Fig. 8, and the description thereof is omitted. When the input reception section 152 of the registration apparatus 2 receives the input operation on the cash total key 1151 (Yes in Act S2), the display controller 151 displays the confirmation screen 1141 (refer to Fig. 10) on the clerk display device 114 (Act S31).

If the input reception section 152 receives the operation input of the OK key 1142 on the confirmation screen 1141 (Yes in Act S32), the display controller 151 displays a guidance screen 1171 as shown in Fig. 6 on the customer display device 117. The customer moves to the checkout apparatus 3 according to the display on the guidance screen 1171 and operates the checkout start key 610 (Act S5). If No is determined in Act S32, the display controller 151 ends the display of the confirmation screen 1141 and returns to a previous display such as registration screen (Act S1). As described above, the registration apparatus 2 may execute a confirmation operation for transferring the transaction information before displaying the guidance screen 1171.

As described above, in the checkout system 1 of the present embodiment, the checkout apparatus 3 receives an instruction operation to start the checkout processing of the checkout apparatus 3, outputs the identification information of the checkout apparatus 3 to the registration apparatus 2 and requests to start the checkout processing in the checkout apparatus 3. As a result, the store clerk which is the operator of the registration apparatus 2 can omit selecting the checkout apparatus 3 as the transmission destination of the transaction information. Therefore, according to the present embodiment, the checkout apparatus, the checkout system, and the method for reducing the burden of a guide job of the store clerk at the time the checkout processing is started by the customer with the semi-self-service type checkout system can be provided.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention.

For example, if the checkout start key 610 is operated, the controller 50 may control the light 22a to emit light. In this way, it is possible to make the checkout apparatus 3 executing the checkout processing stand out. The light 22a of the checkout apparatus 3 which does not execute the checkout processing and the light 22a of the checkout apparatus 3 executing the checkout processing may emit the light with different colors to inform of the processing status. Although the emitted colors are not particularly limited, for example, it may be blue if the checkout processing is not executed, and may be red if the checkout start key 610 is operated and the checkout processing is being executed.

## Claims

1. A checkout system comprising:
a plurality of checkout apparatuses (3a-3d), each checkout apparatus including a display device (62), a first communication interface (40), a payment device, and a first controller (50) configured to:
control the display device to display an instruction to provide an input to start a checkout processing,
receive the input to start the checkout processing,
transmit, via the first communication interface, a checkout processing request, the checkout processing request including identification information for identifying the checkout apparatus,
receive, via the first communication interface and in response to the checkout processing request, transaction information, and
control the payment device to process payment in accordance with the received transaction information,
a registration apparatus (2a, 2b) including a scanner (35) configured to scan a code symbol on a commodity, a second communication interface (140), and a second controller (150) configured to:
generate registration information based on the code symbol scanned by the scanner,
receive, via the second communication interface, the checkout processing request, and
transmit, via the second communication interface and in response to the received checkout processing request, the transaction information including the generated registration information to the checkout apparatus corresponding to the identification information included in the checkout processing request.

2. The checkout system according to claim 1, wherein
the registration apparatus further includes a second display device, and
the second controller controls the second display device to display a confirmation screen requesting an input to confirm whether to transmit the transaction information.

3. The checkout system according to claim 2, wherein the second controller controls the second display device to display the confirmation screen after the checkout processing request is received.

4. The checkout system according to claim 2 or 3, wherein the second controller controls the second display device to display the confirmation screen after the registration information for the transaction is generated and before the checkout processing request is received.

5. The checkout system according to any one of claims 1 to 4, wherein
the registration apparatus further includes a second display device, and
the second controller controls the second display device to display a guidance screen instructing a customer to proceed to one of the plurality of checkout apparatuses.

6. The checkout system according to any one of claims 1 to 5, wherein the second controller is further configured to:
determine a first transaction is complete after the transaction information is transmitted, and
generate registration information corresponding to a second transaction when the first transaction is determined to be complete.

7. The checkout system according to any one of claims 1 to 6, wherein each checkout apparatus further includes:
a display pole with a light, wherein the first controller is further configured to control the light to indicate a status of the checkout apparatus as one of available to start the checkout processing and unavailable to start the checkout processing.

8. The checkout system according to any one of claims 1 to 7, wherein the display device includes an integrated touch panel, and the input to start the checkout processing is received via the touch panel at a position corresponding to the displayed instruction to provide the input to start the checkout processing.

9. The checkout system according to any one of claims 1 to 8, wherein the payment device includes a card reader configured to read a card and process the payment based on card information read by the card reader.

10. The checkout system according to claim 9, wherein the payment device further includes a change dispensing machine configured to process the payment by receiving bills and coins and dispensing bills and coins as change.

11. A checkout apparatus for used in a checkout system that includes a registration apparatus in communication with a plurality of checkout apparatuses, the checkout apparatus comprising:
a display device;
a communication interface;
a payment device; and
a controller configured to:
control the display device to display an instruction to provide an input to start a checkout processing,
receive the input to start the checkout processing,
control the communication interface to transmit a checkout processing request to the registration apparatus, the checkout processing request including identification information for identifying the checkout apparatus,
receive, from the registration apparatus in response to the checkout processing request, transaction information generated by the registration apparatus, and
control the payment device to process payment in accordance with the received transaction information.

12. A checkout method for a checkout system that includes a registration apparatus in communication with a plurality of checkout apparatuses, the method comprising:
displaying on a display device of one checkout apparatus an instruction to provide an input to start a checkout processing;
receiving, in the one checkout apparatus, the input to start the checkout processing;
in response to the received input to start the checkout processing, transmitting a checkout processing request from the one checkout apparatus to the registration apparatus, the checkout processing request including identification information for identifying the one checkout apparatus;
receiving in the one checkout apparatus, from the registration apparatus in response to the checkout processing request, transaction information generated by the registration apparatus; and
processing a payment in the one checkout apparatus in accordance with the received transaction information.

13. The method according to claim 12, further comprising:
controlling a light on each of the plurality of checkout apparatuses to indicate a status of the corresponding checkout apparatus as one of available to start the checkout processing and unavailable to start the checkout processing.

14. The method according to claim 12 or 13, wherein
the input to start the checkout processing is received via a touch panel on the one checkout apparatus at a position corresponding to the displayed instruction to provide the input to start the checkout processing.

15. The method according to any one of claims 12 to 14, wherein the payment is processed with a card reader configured to read a card and process the payment based on the read card.
